Europäisches Patentamt

(19) European Patent Office

Office européen des brevets

(11) Numéro de publication: **0 267 821 B1**

# (12) FASCICULE DE BREVET EUROPEEN

(45) Date de publication de fascicule du brevet:
16.10.91

(51) Int. Cl.⁵: **A01F 15/14**

(21) Numéro de dépôt: 87402259.3

(22) Date de dépôt: 09.10.87

(54) **Procédé et dispositif de commande de bras de guidage de ficelle de liage de balles cylindriques dans une presse ramasseuse.**

(30) Priorité: 10.10.86 FR 8614107

(43) Date de publication de la demande:
18.05.88 Bulletin 88/20

(45) Mention de la délivrance du brevet:
16.10.91 Bulletin 91/42

(84) Etats contractants désignés:
DE GB

(56) Documents cités:
EP-A- 0 057 122     EP-A- 0 192 904
DE-A- 3 007 646     FR-A- 1 552 696
FR-A- 2 541 560     GB-A- 2 018 192

(73) Titulaire: RIVIERRE CASALIS
8, rue André Dessaux
F-45400 Fleury Les Aubrais(FR)

(72) Inventeur: Mouret, Patrick
328, rue de la Garenne
F-45660 Mardie(FR)

(74) Mandataire: Hirsch, Marc-Roger
Cabinet Hirsch 34 rue de Bassano
F-75008 Paris(FR)

EP 0 267 821 B1

Rank Xerox (UK) Business Services

## Description

L'invention concerne un procédé et un dispositif de commande de bras de guidage de ficelle de liage de balles cylindriques dans une presse ramasseuse. Le dispositif est destiné à commander le déplacement d'au moins un bras de guidage d'une ficelle de liage ou lien d'une balle cylindrique dans une presse ramasseuse, ledit bras de guidage étant susceptible de pivoter sous l'action d'un câble de commande pour effectuer un déplacement alternatif le long d'une chambre de formage de la balle cylindrique.

Une telle presse décrite dans la publication FR-A-2 541 560 assure le ramassage des andains et leur enroulement en spirale dans une chambre de pressage expansible jusqu'à ce que la balle occupe totalement la chambre de pressage.

La balle est ensuite entourée par un lien enroulé en hélice autour de la balle avant son évacuation de la presse.

Le liage de la balle exige une attention soutenue de la part du conducteur de la presse. D'une part, le bras de guidage du lien doit être correctement disposé au début du processus de liage et, d'autre part, le mouvement du bras doit être suffisamment lent pour disposer autour de la balle un nombre suffisant de tours de ficelle pour assurer la cohésion de celle-ci.

La publication FR-A-2 442 577 décrit une presse dans laquelle le bras de guidage du lien est pivoté au moyen d'un câble de traction actionné par le conducteur.

On connaît aussi des dispositifs de liage dans lesquels le bras de guidage est déplacé suivant un mouvement de va-et-vient par un dispositif de commande à moteur, une intervention manuelle pouvant être nécessaire pour régler la vitesse du moteur ou pour commander son arrêt.

Pour remédier à cet inconvénient, la publication FR-A-2 414 295 propose une commande du mouvement du bras de guidage par la balle elle-même lorsque celle-ci a atteint une grosseur prédéterminée. A cet effet, la balle actionne un dispositif d'enclenchement du motoréducteur de commande du dispositif de liage.

L'invention vise à commander de façon plus sûre le déplacement des bras de guidage à l'achèvement de la balle à son diamètre maximal, lorsque celle-ci est supportée par des rouleaux d'entraînement en rotation, en utilisant un bras de tension des courroies de formage de la balle pour actionner le bras de guidage du lien.

Selon l'invention, le procédé de commande du déplacement d'au moins un bras de guidage d'une ficelle de liage de balles cylindriques dans une presse ramasseuse sur laquelle le bras de guidage est monté pivotant sous l'action d'un câble de commande, à proximité de la balle en appui sur un rouleau d'entraînement est caractérisé en ce qu'un bras de tension de courroies de formage de la balle est en appui sur la balle, et en ce qu'à la fin du processus de pressage, on utilise l'écartement du bras de tension et du rouleau d'entraînement pour provoquer, par l'intermédiaire d'une commande à câble, la mise en rotation d'un système à came d'actionnement du bras de guidage vers les positions successives: de début du liage par la ficelle de liage, de distribution des spires de ficelle de liage autour de la balle, puis de fin de liage et enfin d'attente jusqu'à la coupure de la ficelle de liage.

Le procédé ainsi défini est mis en oeuvre par un dispositif de commande mécanique actionné par les rouleaux de support et d'entraînement de la balle et caractérisé en ce qu'il comporte dans un boîtier portant le bras de guidage: un bras de tension monté pivotant autour d'un axe et portant au moins un rouleau en appui sur des courroies de formage de la balle; une came rotative autour d'un axe et dont le profil présente une partie de petit rayon et une partie de grand rayon; une roue à dents coaxiale et reliée en rotation à ladite came; un cliquet de couplage coopérant avec ladite roue à dents et monté sur un bras d'entraînement de came, articulé librement sur l'axe de came et déplacé en va-et-vient par un système bielle-manivelle entraîné par au moins un rouleau d'entraînement de la balle en rotation; un palonnier monté rotatif sur l'axe de came et relié à l'une de ses extrémités par un câble audit bras de tension et, à l'autre extrémité, par un doigt d'entraînement à un levier rotatif muni d'une rampe susceptible de coopérer avec l'extrémité d'un levier coudé relié par une bielle à un élément sectoriel qui est monté à rotation autour de l'axe de came et est susceptible de repousser le cliquet de couplage hors du contact avec les dents de la roue à dents; une bielle de commande articulée sur un axe du boîtier, cette bielle portant un galet d'entraînement reposant sur le profil de la came et étant reliée au câble de commande des bras de guidage, et en ce que ces éléments sont agencés de telle manière que le déplacement du bras de tension par la balle formée a son diamètre maximal provoque, par traction sur le câble de liaison au palonnier, la rotation de celui-ci sur l'axe de came et l'entraînement par le doigt d'entraînement du levier rotatif dont la rampe repousse le levier coudé et sa bielle qui entraîne l'élément sectoriel dans une position autorisant l'application du cliquet de couplage sur les dents de la roue à dents, qui est ainsi entraînée en rotation par le bras d'entraînement avec la came qui, en passant du petit rayon au grand rayon, fait déplacer la bielle de

2

commande et le câble de commande et, par voie de conséquence, les bras de guidage.

Selon d'autres modes de réalisation de l'invention, le levier coudé est relié, à son extrémité coopérant avec la rampe, a un levier articulé sur un axe porté par le boîtier par l'intermédiaire d'un axe coopérant avec ladite rampe et il est muni d'une partie de crémaillère coopérant avec un galet solidaire d'une poulie de renvoi de la ficelle de liage. Selon un autre mode de réalisation, le levier coudé porte une butée d'arrêt servant de logement au galet et coopère avec une butée lorsque le galet est en arrêt sur la butée dudit levier coudé.

D'autres caractéristiques et avantages de l'invention ressortiront plus clairement de la description qui va suivre d'un exemple de réalisation, faite en référence au dessin annexé, dans lequel:

- la figure 1    est une vue latérale de la presse dont on a enlevé une partie de la paroi latérale dans le but de montrer la balle en achèvement et l'implantation du dispositif de commande des bras de guidage du lien;
- la figure 2    représente une vue latérale du dispositif de commande des bras de guidage du lien pendant la formation de la balle;
- la figure 3    représente une vue latérale du dispositif dans l'état correspondant à la balle achevée;
- la figure 4    représente une vue latérale du dispositif au cours du processus de distribution du lien autour de la balle;
- la figure 5    représente la position finale du dispositif à la suite de la distribution du lien.

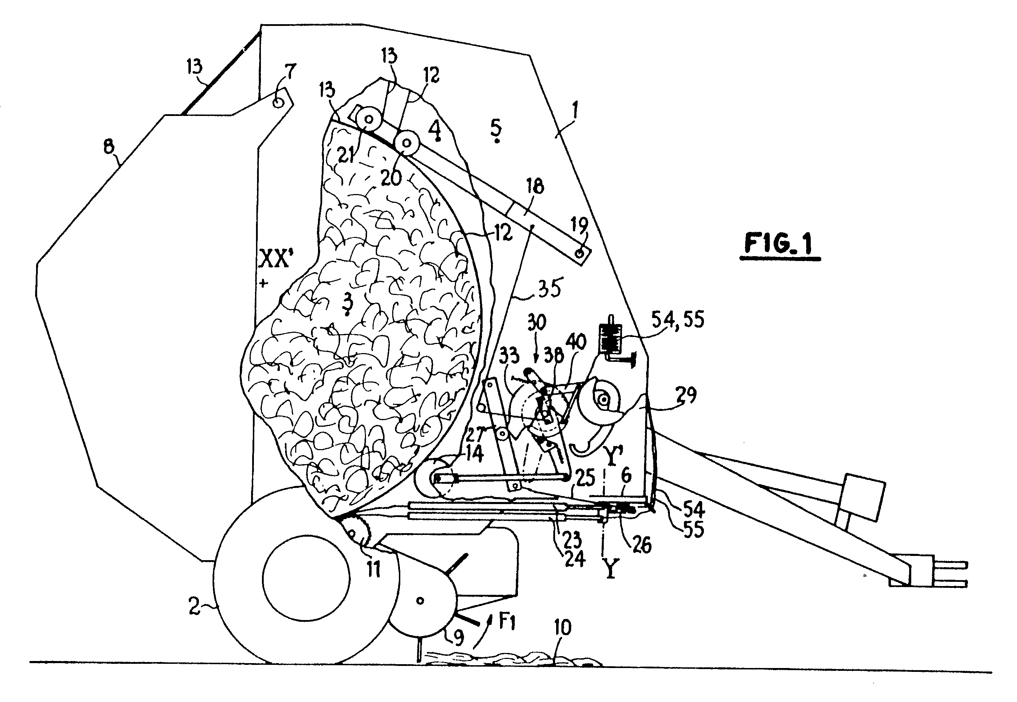

En se reportant plus particulièrement à la figure 1, la presse à fourrage dont il est question est une presse en soi connue et notamment une machine tractée comme c'est l'usage en agriculture. Elle peut être illustrée par la publication FR-A-2 541 560 déposée au nom de la demanderesse.

On retiendra essentiellement que la presse comporte un châssis 1 reposant sur le sol par l'intermédiaire de roues 2, une chambre de formage 3 dans laquelle le fourrage introduit sous la forme d'une nappe est enroulé sur lui-même autour d'un axe horizontal XX' et un mécanisme de commande de liage 30 monté sur une paroi 5 de la presse. Pour les autres parties caractéristiques de la presse, il est possible de se référer à la publication FR-A-2 541 560.

Le châssis 1 comprend essentiellement deux parois latérales 4, 5 qui délimitent transversalement la chambre de formage 3 et portent le mécanisme de liage 30.

A la partie arrière du châssis 1, est articulée autour d'un axe 7 une porte 8 supportant des rouleaux de renvoi d'un ensemble de courroies, dont l'ouverture et la fermeture peuvent être commandées par des vérins ou moyens équivalents non représentés et qui assure l'évacuation de la balle à la fin du cycle de fabrication de celle-ci. La partie avant du châssis porte un organe ramasseur 9 à dents tournant dans le sens de la flèche F1. Le ramasseur 9 ramasse au cours du mouvement d'avance de la presse des andains de récolte 10 et les transporte dans la machine après passage au contact d'un rouleau d'alimentation cranté 11 tournant dans le même sens.

Deux ensembles de courroies 12 et 13 supportés par des rouleaux de renvoi comprennent de façon usuelle un certain nombre de courroies parallèles réparties sur la largeur de la presse. Les ensembles de courroies 12 et 13 sont entraînés par des rouleaux d'entraînement moteurs tels que 14 entraînés par une transmission par courroie ou chaîne à partir d'une boîte de renvoi qui reçoit le mouvement par un arbre de transmission relié à l'arbre de prise de force du tracteur. Le rouleau moteur 14, l'ensemble de courroies 12, les rouleaux de renvoi correspondants de cet ensemble et certains rouleaux de renvoi de l'ensemble de courroies 13 sont solidaires du châssis 1 tandis que d'autres rouleaux de renvoi de l'ensemble de courroies 13 sont portés par la porte 8.

Un bras de tension 18 monté à articulation autour d'un axe 19 porté par le châssis 1 supporte deux rouleaux 20, 21 respectivement en appui sur les courroies des ensembles 12, 13. Les rouleaux d'appui 20, 21 délimitent une fente de passage des ensembles de courroies 12, 13. Les brins de courroies situés entre le rouleau moteur 14, les rouleaux d'appui 20, 21 et le rouleau cranté 11 délimitent en partie la chambre de formage 3.

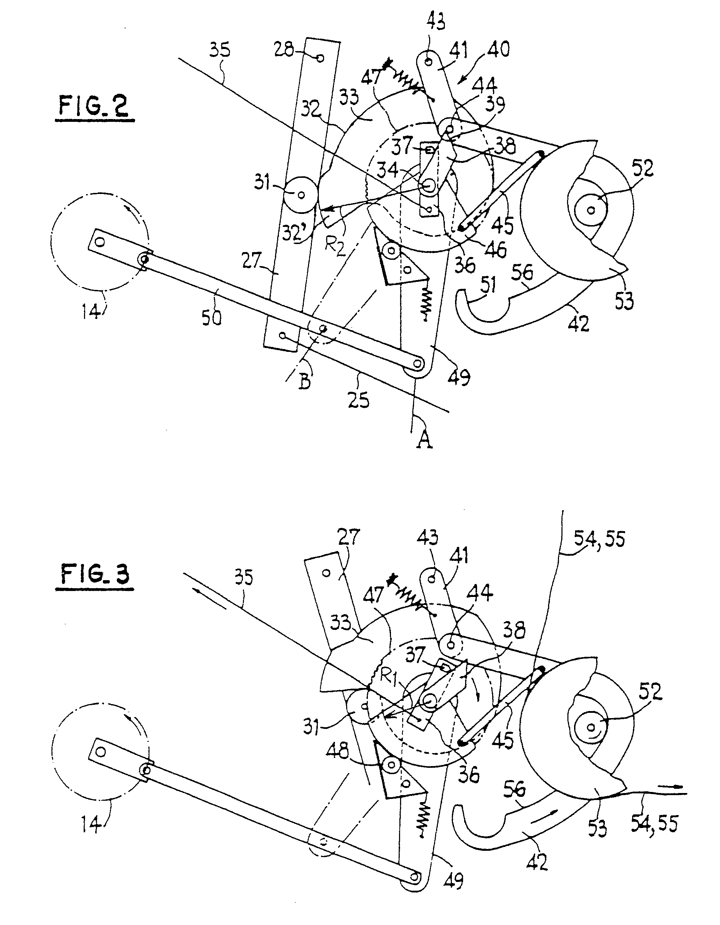

Le dispositif de liage est constitué essentiellement par deux bras de guidage 23, 24 qui se présentent sous une forme tubulaire et qui sont montés pivotants autour d'un axe YY' sous l'action d'un câble de commande 25 pour effectuer un déplacement alternatif le long de la chambre de formage 3. A cet effet, les bras 23, 24 sont solidaires d'un levier de renvoi coudé 26, articulé autour de l'axe YY' et dont l'extrémité porte l'attache du câble 25. L'autre extrémité du câble 25 est solidaire de l'extrémité d'une bielle de commande 27 articulée sur un axe 28 porté par la paroi d'un boîtier de réception 29 du dispositif de commande des bras 23, 24. La bielle de commande 27 porte, par ailleurs, un galet d'entraînement 31 sur lequel repose le profil 32 d'une came d'actionnement 33. La came 33 est montée à rotation autour d'un axe 34. Le profil 32 présente deux rayons de courbure extrêmes R1, R2. Le plus petit de ces rayons R1 (voir la figure 3) assure un appui au galet 31 et, par voie de conséquence, à la bielle 27 qui détend le câble 25 et

3

libère les bras 23, 24. Lorsque le galet 31 vient sur le plus grand rayon de courbure R2 du profil 32 (voir la figure 2), le galet 31 fait pivoter la bielle 27 et, par voie de conséquence, tire sur le oâble 25 et fait pivoter les bras 23, 24.

Le changement brutal du rayon du profil 32 à l'extrémité d'un appendice 32' du profil permet le déplacement brutal de l'appui du galet 31 et par voie de conséquence le retour rapide des bras 23, 24 à leur position initiale. Les déplacements des bras 23, 24 en fonction de la position d'appui du galet 31 sur le profil 32 sont indiqués dans le tableau récapitulatif suivant sur lequel ont été portées les séquences du liage.

| Mouvement de came | R1 | Passage R1-R2 | R2 | Passage R2-R1 |
|---|---|---|---|---|
| Position bras 23, 24 | Départ | Déplacement | Arrivée | Retour départ |
| Séquence liage | Spires de début de liage | Distribution des spires | Spires de fin de liage | Coupure du lien |

Le tableau précité indique le déplacement des bras de guidage 23, 24 provoqué par la came 33 au cours de la rotation de celle-ci.

Le bras de tension 18 porte l'ancrage d'un câble 35 de commande d'un palonnier ou levier 36 monté à rotation autour de l'axe 34. Le palonnier 36 porte un doigt d'entraînement escamotable 37 susceptible d'entraîner un levier 38 d'actionnement de la came 33. L'extrémité du levier 38 forme une rampe d'actionnement 39 d'un mécanisme 40 servant à enclencher l'entraînement de la came 33 en vue d'obtenir une rotation de celle-ci au cours de la rotation de la balle achevée, le palonnier 36 étant actionné par la traction exercée par le bras de tension 18 sur le câble 35.

Le mécanisme 40 se présente sous la forme d'un embiellage constitué par un ensemble déformable formé par des leviers 41, 42 dont l'un 41 est articulé autour d'un axe 43 porté par le boîtier 29 et dont l'autre 42 présente une configuration coudée. Les leviers 41, 42 sont articulés entre eux sur un même axe 44 susceptible d'être déplacé radialement par la rampe de manoeuvre 39. Le levier 42 est par ailleurs articulé à l'extrémité d'une bielle 45 dont l'autre extrémité est articulée à un élément sectoriel 46 qui est monté à rotation autour de l'axe 34.

Une roue de couplage à dents 47, rigidement reliée en rotation à la came, peut être entraînée par un cliquet de couplage à ressort 48, articulé sur un bras 49 tournant librement autour de l'axe 34 de la came. Le déplacement en va-et-vient du bras 49 entre une position A représentée en traits pleins à la figure 2 et une position B représentée en traits mixtes est réalisé par un système bielle-manivelle 50 solidaire de l'axe du rouleau 14.

Le levier coudé 42 porte par ailleurs une butée d'arrêt 51 susceptible de constituer le logement d'un galet 52 monté à rotation solidaire d'une poulie de renvoi 53 des liens 54, 55 guidés respectivement par les bras 23, 24. Le galet 52 est en contact rotatif avec le levier 42 et possède à cet effet des dents en contact avec une crémaillère de contact 56 portée intérieurement par le levier 42. Une butée 60 évite le contact du levier 42 avec le galet 52 au cours de la rotation de la came 33.

Les phases de fonctionnement du dispositif sont décrites ci-après.

Formation de la balle (figure 2)

Le système bielle-manivelle 50 entraîné par le rouleau moteur 14 actionne le bras 49 qui effectue un déplacement alternatif autour de l'axe 34. Le bras de tension 18 est déplacé progressivement par l'action de la balle sur les rouleaux d'appui 20, 21.

Achèvement de la balle (figure 3)

Le rouleau moteur 14 actionne toujours le bras 49. L'écartement entre le rouleau moteur 14 et le bras de tension 18 est maximal et le bras de tension 18 tend le câble 35 qui fait tourner le palonnier 36. Le doigt 37 du palonnier 36 entraîne le levier 38 et, par voie de conséquence, l'ensemble came 33-roue dentée 47.

La rotation de l'appendice 32' du profil 32 laisse tomber le galet 31 et la bielle 27 vers l'axe 34 sur le rayon R1, ce qui détend le câble 25 et autorise le positionnement des bras 23, 24 à une extrémité de la chambre de formage 3.

Les liens 54, 55 sont enroulés autour de la poulie de renvoi 53. La rotation de la balle par le rouleau 14 exerce une traction sur les liens et la mise en rotation de la poulie 53. La rotation de la poulie 53 provoque le déplacement vertical du levier coudé 42 par l'intermédiaire du galet 52.

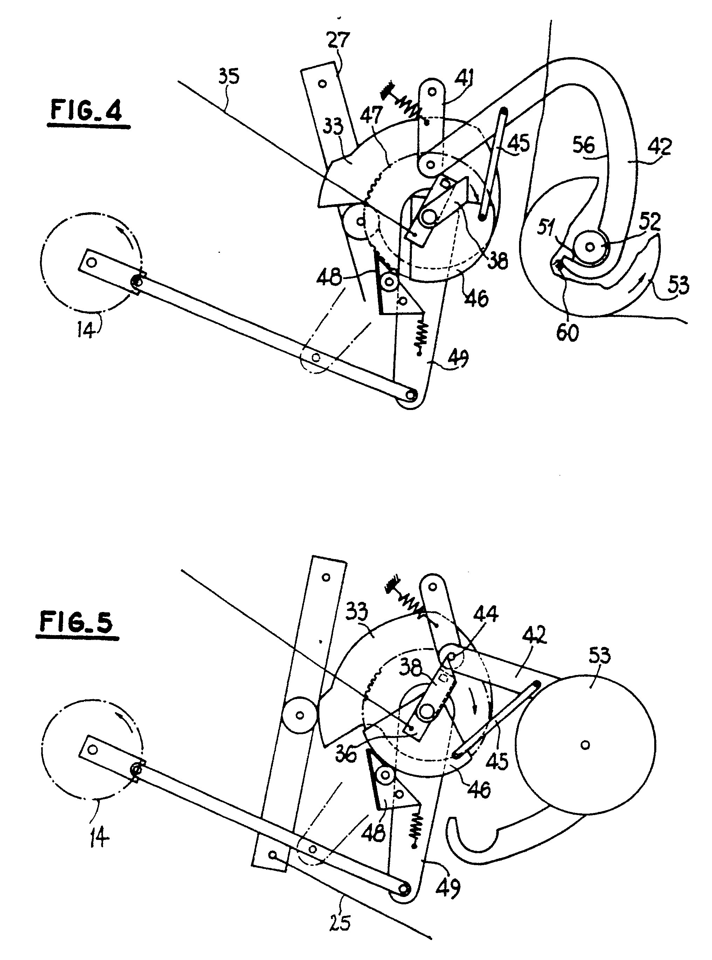

Début du liage (figure 4)

Le rouleau moteur 14 actionne toujours le bras 49 qui effectue un déplacement alternatif.

Le levier 42 a entraîné la bielle 45 et l'élément sectoriel 46 en rotation autour de l'axe 34. Le galet 52 est en arrêt sur la butée 51 du levier 42, ce dernier étant immobilisé contre la butée 60.

Le cliquet à ressort 48 qui n'est plus repoussé par l'élément sectoriel 46 entre en contact avec la denture de la roue 47. La came 33 et le levier 38 sont entraînés par le cliquet 48 à chaque déplacement du bras 49 entre les positions A et B et la came 33 se déplace pas à pas en correspondance avec le déplacement angulaire de la roue à dents 47.

Le passage du profil de came 32 du rayon R1 au rayon R2 au contact du galet 31 déplace la bielle 27 et, par voie de conséquence, les bras 23, 24 le long de la chambre 3.

Fin du liage (figure 5)

La came 33 continue sa rotation sous l'action du mouvement d'entraînement alternatif communiqué par le bras 49. La came 33 entraîne le levier 38 dont la rampe repousse au tour suivant l'axe 44. Le levier 42 est repoussé dans la position représentée à la figure 2. L'élément sectoriel 46 ramené dans la position de départ provoque le déclenchement du cliquet 48, ce qui supprime l'entraînement de la came 33 à partir du rouleau moteur 14 et du bras 49. La balle continue à tourner jusqu'à la coupure des liens 54, 55.

**Revendications**

1. Procédé de commande du déplacement d'au moins un bras de guidage (23, 24) d'une ficelle de liage (54, 55) de balles cylindriques dans une presse ramasseuse sur laquelle le bras (23, 24) de guidage est monté pivotant sous l'action d'un câble de commande (25), à proximité de la balle en appui sur un rouleau d'entraînement (14), caractérisé en ce qu'un bras de tension (18) de courroies (12, 13) de formage de la balle est en appui sur la balle et en ce qu'à la fin du processus de pressage, on utilise l'écartement du bras de tension (18) et du rouleau d'entraînement (14) pour provoquer, par l'intermédiaire d'une commande à câble (35), la mise en rotation d'un système à came (48, 47, 33) d'actionnement du bras de guidage (23, 24) vers les positions successives: de début du liage par la ficelle de liage, de distribution des spires de ficelle de liage autour de la balle, puis de fin de liage et enfin d'attente jusqu'à la coupure de la ficelle de liage (54, 55).

2. Dispositif pour la mise en oeuvre du procédé selon la revendication 1, destiné à commander le déplacement d'au moins un bras de guidage (23, 24) d'une ficelle de liage ou lien (54, 55) d'une balle cylindrique dans une presse ramasseuse, ledit bras de guidage (23, 24) étant susceptible de pivoter sous l'action d'un câble de commande (25) pour effectuer un déplacement alternatif le long d'une chambre de formage (3) de la balle cylindrique, caractérisé en ce qu'il comporte dans un boîtier (29) portant le bras de guidage (23, 24): un bras de tension (18) monté pivotant autour d'un axe (19) et portant au moins un rouleau (20, 21) en appui sur des courroies (12, 13) de formage de la balle; une came (33) rotative autour d'un axe (34) et dont le profil (32) présente une partie de petit rayon (R1) et une partie de grand rayon (R2); une roue à dents (47) coaxiale et reliée en rotation à ladite came (33); un cliquet de couplage (48) coopérant avec ladite roue à dents (47) et monté sur un bras (49) d'entraînement de came, articulé librement sur l'axe de came (34) et déplacé en va-et-vient par un système bielle-manivelle (50) entraîné par au moins un rouleau (14) d'entraînement de la balle en rotation; un palonnier (36) monté rotatif sur l'axe de came (34) et relié à l'une de ses extrémités par un câble (35) audit bras de tension (18) et, à l'autre extrémité, par un doigt d'entraînement (37) à un levier rotatif (38) muni d'une rampe (39) susceptible de coopérer avec l'extrémité d'un levier coudé (42) relié par une bielle à un élément sectoriel (46) qui est monté à rotation autour de l'axe de came (34) et est susceptible de repousser le cliquet de couplage (48) hors du contact avec les dents de la roue à dents (47); une bielle de commande (27) articulée sur un axe (28) du boîtier (29), cette bielle portant un galet

5

d'entraînement (31) reposant sur le profil (32) de la came (33) et étant reliée au câble de commande (25) des bras de guidage (23, 24), et en ce que ces éléments sont agencés de telle manière que le déplacement du bras de tension (18) par la balle formée à son diamètre maximal provoque, par traction sur le câble (35) de liaison au palonnier (36), la rotation de celui-ci sur l'axe de came (34) et l'entraînement par le doigt d'entraînement (37) du levier rotatif (38) dont la rampe (39) repousse le levier coudé (42) et sa bielle (45) qui entraîne l'élément sectoriel (46) dans une position autorisant l'application du cliquet de couplage (48) sur les dents de la roue à dents (47), qui est ainsi entraînée en rotation par le bras d'entraînement (49) avec la came (33) qui, en passant du petit rayon (R1) au grand rayon (R2), fait déplacer la bielle de commande (27) et le câble de commande (25) et, par voie de conséquence, les bras de guidage (23, 24).

3. Dispositif selon la revendication 2, caractérisé en ce que le levier coudé (42) est relié, à son extrémité coopérant avec la rampe (39), à un levier (41) articulé sur un axe (43) porté par le boîtier (29) par l'intermédiaire d'un axe (44) coopérant avec ladite rampe (39).

4. Dispositif selon la revendication 2 ou 3, caractérisé en ce que le levier coudé (42) est muni d'une partie de crémaillère (56) coopérant avec un galet (52) solidaire d'une poulie de renvoi (53) de la ficelle de liage (54, 55).

5. Dispositif selon la revendication 4, caractérisé en ce que le levier coudé (42) porte une butée d'arrêt (51) servant de logement au galet (52).

6. Dispositif selon la revendication 5, caractérisé en ce que le levier coudé (42) coopère avec une butée (60) lorsque le galet (52) est en arrêt sur la butée (51) dudit levier coudé.

**Claims**

1. Method for controlling the movement of at least one guide arm (23, 24) which guides binder twine (54, 55) for binding cylindrical bales in a pick-up baler in which the guide arm (23, 24) is pivotally mounted and adapted to pivot under the effect of a control cable (25) in the vicinity of the bale abutting against a driving roller (14), characterized in that an arm (18) for tensioning bale shaping belts (12, 13) bears against the bale, and in that at the end of the pressing process, moving apart of the tension arm (18) and the driving roller (14) is employed to bring about, via a cable control (35), initiation of rotation of a cam system (48, 47, 33) for actuating movement of the guide arm (23, 24) to the following successive positions for: starting binding with said binder twine, distributing turns of said twine around the bale, then for the end of binding and finally for awaiting severing of said binder twine (54, 55).

2. Device for carrying out the method according to claim 1, for controlling the movement of at least one guide arm (23, 24) which guides binder or tying twine (54, 55) for binding cylindrical bales in a pick-up baler in which the guide arm (23, 24) is pivotally mounted and adapted to pivot under the effect of a control cable (25) in order to perform a reciprocating movement along a shaping chamber (3) for said cylindrical bale, characterized in that it includes in a housing (29) carrying said guide arm (23, 24): a tension arm (18) pivotally mounted about a pivot pin (19) and carrying at least one roller (20, 21) that abuts against bale-shaping belts (12, 13), a cam (33) rotatable about a shaft (34) the contour (32) of which has a small-radius portion (R1) and a large-radius portion (R2); a toothed wheel (47) arranged coaxially with said cam (33) and rotationally linked thereto; a coupling pawl member (48) cooperating with said toothed wheel (47) and mounted on a cam drive arm (49) that pivots freely on said cam shaft (34) and is reciprocated by a crank-connecting rod system (50) driven by at least one roller (14) for driving the bale in rotation; a double lever arm (36) rotatably mounted on said cam shaft (34) with one of its ends linked by a cable (35) to said tension arm (18), and its other end linked by a drive finger (37) to a rotatable lever (38) provided with an inclined edge (39) adapted to cooperate with the end of an elbow arm (42) linked by a connecting rod to a segmented body (46) rotatably mounted on said cam shaft (34) and operative to push said coupling pawl member (48) out of contact with the teeth of said toothed wheel (47); a control link (27) pivoted on a pivot pin (28) of said housing (29), said control link carrying a drive roller (31) bearing against the contour (32) of said cam (33) and being linked to the control cable (25) of the guide arms (23, 24), and in that these components are so arranged that movement of said tension arm (18) by the bale shaped to its maximum diameter brings about, through traction on the cable (35) linked to said double lever arm (36), rotation thereof on the cam shaft (34) and drive by said drive finger (37) of the rotatable lever (38), the inclined edge (39) of which pushes said elbowed lever (42) and the connecting rod (45) thereof bringing said segmented body (46) into a position where application of said linking pawl member (48) to the teeth of said toothed wheel (47) is possible, said toothed wheel being rotated by said drive arm (49) with the cam (33) which, in changing over from the small radius (R1) to the large radius (R2), causes movement of said control link [27] and control cable (25), and as a consequence thereof, movement of said guide arms (23, 24).

3. Device according to claim 2, characterized in that said elbowed lever (42) is linked, at the end thereof cooperating with said inclined edge (39), to a lever (41) pivoted on a pin (43) carried by said housing (29) via a pin (44) cooperating with said inclined edge (39).

4. Device according to claim 2 or 3, characterized in that the elbowed lever (42) carries a rack portion (56) cooperating with a roller (52) integral with a guide pulley (53) for said binder twine (54, 55).

5. Device according to claim 4, characterized in that the elbowed lever (42) carries a detent (51) acting to house said roller (52).

6. Device according to claim 5, characterized in that said elbowed lever (42) cooperates with an abutment means (60) when the roller (52) is halted by the detent (51) of said elbowed lever.

**Patentansprüche**

1. Verfahren zum Steuern der Bewegung wenigstens eines Führungsarms (23, 24) einer Bindeschnur (54, 55) von Rollballen in einer Pick-up-Presse auf welcher der Führungsarm (23, 24) schwenkbar unter der Einwirkung eines Steuerkabels (25) montiert ist, in Nähe des auf eine Zugrolle (14) gestützten Ballens, dadurch gekennzeichnet, dass ein Arm (18) zur Spannung der ballenbildenden Riemen (12, 13) auf den Ballen gestützt ist, und dadurch, dass am Ende des Pressvorgangs das Entfernen des Spannarms (18) und der Antriebswalze (14) genutzt wird, um mittels eines Steuerkabels (35) das Drehen eines Nockensystems (48, 47, 33) zur Betätigung des Führungsarms (23, 24) in nachstehende aufeinanderfolgende Positionen, zu bewirken: Bindebeginn durch die Bindeschnur, Verteilung der Bindeschnurspulen um den Ballen, dann Bindeende und schliesslich Warten bis zum Schneiden der Bindeschnur (54, 55).

2. Vorrichtung zur Anwendung des Verfahrens nach Anspruch 1, zum Steuern der Bewegung wenigstens eines Führungsarms (23, 24) einer Bindeschnur oder Bandes (54, 55) eines Rollballens in einer Pick-up-Presse, welcher Führungsarm (23, 24) sich unter Einwirkung eines Steuerkabels (25) drehen kann zur Hin- und Herbewegung entlang einer Umformungskammer (3) des Rollballens, dadurch gekennzeichnet, dass sie in einem den Führungsarm (23, 24) tragenden Gehäuse (29) aufweist: einen schwenkbar um eine Achse (19) montierten und wenigstens eine auf die ballenbildenden Riemen (12, 13) gestützte Walze (20, 21) tragenden Zugarm (18); eine um eine Achse (34) drehende Nocke (33) und deren Profil (32) einen kleinen Radiusteil (R1) und einen grossen Radiusteil (R2) hat; ein koaxiales und drehend mit der Nocke (33) verbundenes Zahnrad (47); eine mit dem Zahnrad (47) zusammenarbeitende und auf einem frei auf der Nockenachse (34) gelagerten und durch ein Pleuel-Kurbel-System (50) hin und her bewegtem, wenigsten durch eine Antriebswalze (14) des drehenden Ballens angetriebenem Nockenantriebsarm (49) montierte Kupplungsklinke (48); einen drehend auf der Nockenachse (34) montierten Steuerhebel (36), der mit einem seiner Enden durch ein Kabel (35) mit dem Spannungsarm (18), und mit dem anderen Ende durch einen Antriebsfinger (37) mit einem mit einer Rampe (39) versehenen Drehhebel (38) verbunden ist, welche mit dem Ende eines Winkelhebels (42) zusammenarbeiten kann der drehbar um die Nockenachse (34) montiert ist und die Kupplungsklinke (48) ausserhalb des Kontakts der Zähne des Zahnrads (47) schieben kann; eine auf einer Achse (28) des Gehäuses (29) gelenkig angebrachte Steuerstange (27), wobei diese Stange eine auf dem Profil (32) der Nocke (33) liegende Antriebsrolle (31) trägt und mit dem Antriebskabel (25) des Führungsarmes (23, 24) verbunden ist, und dadurch, dass diese Elemente derart angeordnet sind, dass die Bewegung des Zugarms (18) durch den zu seinem maximalen Durchmesser geformten Rollballen, durch Ziehen des Kabels (35) zur Verbindung mit dem Steuerhebel (36), die Drehung von diesem über die Nockenachse (34) bewirkt und den Antrieb durch den Antriebsfinger (37) des Drehhebels (38) dessen Rampe (39) den Winkelhebels (42) und seine Stange (45) zurückschiebt, die das Sektorelement (46) in eine Lage bringt die das Andrücken der Kupplungsklinke (48) auf die Zähne des Zahnrads (47) erlaubt, welches so durch den Antriebsarm (49) in Drehung gebracht wird mit der Nocke (33) welche, beim passieren des kleinen Radius (R1) zu dem grossen Radius (R2), die Steuerstange (27) und den Antriebskabel (25) und infolgedessen auch den Führungsarm (23, 24) bewegt.

3. Vorrichtung nach Anspruch 2, dadurch gekennzeichnet, dass der Winkelhebel (42) an seinem mit der Rampe (39) zusammenarbeitenden Ende mit einem Hebel (41) verbunden ist, der über eine mit der Rampe (39) zusammenarbeitende Achse (44) auf einer von dem Gehäuse (29) getragenen Achse (43) gelenkig angebracht ist.

4. Vorrichtung nach Anspruch 2 oder 3, dadurch gekennzeichnet, dass der Winkelhebel (42) mit einer Teil-Zahnstange (53) versehen ist, die mit einer mit einer Umlenkrolle (53) der Bindeschnur (54, 55) fest verbundenen Rolle (52) zusammenwirkt.

5. Vorrichtung nach Anspruch 4, dadurch gekennzeichnet, dass der Winkelhebel (42) eine der Rolle (52) als Lagerung dienenden Anfahrstopp (51) trägt.

6. Vorrichtung nach Anspruch 5, dadurch gekennzeichnet, dass der Winkelhebel (42) mit einem Anschlag (60) zusammenwirkt wenn die Rolle (52) auf dem Anschlag (51) des Winkelhebels gehalten wird.

**FIG.1**

FIG.2

FIG.3

FIG.4

FIG.5